# EUROPÄISCHE PATENTANMELDUNG

(11) **EP 1 046 826 A2**
(43) Veröffentlichungstag der Anmeldung: **25.10.2000**
(21) Anmeldenummer: 00108229.6
(22) Anmeldetag: 14.04.2000
(51) Int. Cl.: F16B 33/02, F16B 25/00

(54) **Betonschraube**

(30) Priorität: 17.04.1999 DE 19917469
(71) Anmelder: Adolf Würth GmbH & Co. KG, 74653 Künzelsau (DE)
(72) Erfinder: Wunderlich, Andreas, 74635 Kupferzell (DE)
(74) Vertreter: Patentanwälte Ruff, Beier und Partner

(57) **Zusammenfassung**

Eine Betonschraube enthält ein Gewinde, dessen beide Gewindeflanken von dem Schaft aus nach außen aufeinanderzu konvergieren. Sie treffen sich aber nicht in einer Gewindekante, sondern in einem Flächenabschnitt, der eine von null verschiedene Breite aufweist. Der Flächenabschnitt liegt in einer Zylinderfläche.

Die Gewindeflanken können Kerben aufweisen, die als Vertiefungen in den Gewindeflanken ausgebildet sind, so dass die Außenkontur der Gewindegänge nicht von der Zylinderfläche nach innen abweicht.

## Beschreibung

Es ist bekannt, dass man Befestigungen in Beton mit Hilfe von Betonschrauben durchführen kann, die in Löcher direkt eingeschraubt werden, ohne dass man einen Dübel benötigt.

Bei einer bekannten Betonschraube dieser Art ist ein Doppelganggewinde vorhanden, dessen beide Gänge einen unterschiedliche Außendurchmesser aufweisen (DE 33 01 414 A1).

Der Erfindung liegt die Aufgabe zugrunde, eine Betonschraube zu schaffen, die verbesserte Halteeigenschaften mit verbesserten Einschraubeigenschaften kombiniert.

Zur Lösung dieser Aufgabe schlägt die Erfindung eine Betonschraube mit den Merkmalen des Anspruchs 1 vor. Weiterbildungen der Erfindung sind Gegenstand der abhängigen Ansprüche, deren Wortlaut ebenso wie der Wortlaut der Zusammenfassung durch Bezugnahme zum Inhalt der Beschreibung gemacht wird.

Während es bei Schrauben üblich ist, dass das Gewinde eine Gewindekante bildet, an der sich die Gewindeflanken in einer Linie treffen, weist die Schraube nach der Erfindung eine Ausbildung auf, bei der die Kante abgeflacht ist, also in einer Fläche liegt. Diese Fläche liegt mindestens angenähert in einer Zylinderfläche, vorzugsweise in einer gemeinsamen Zylinderfläche um die Achse der Schraube. Es können jedoch auch geringe Abweichungen von dieser Zylinderfläche vorgesehen sein.

Es kann erfindungsgemäß vorgesehen sein, dass die "abgeflachte Gewindekante" nur über einen Teil der Länge der Schraube vorhanden ist, oder dass sich abgeflachte Teile mit einer scharfkantigen Kante abwechseln, oder auch dass die Breite des flächigen Abschnitts sich über die Länge des Gewindes ändert, beispielsweise auch zunimmt und wieder abnimmt.

Erfindungsgemäß kann aber auch vorgesehen sein, dass trotz des Abwechselns von schmalen und breiten Abschnitten die flächige Ausbildung der Gewindekante über die gesamte Länge des Gewindes vorhanden ist.

Erfindungsgemäß kann vorgesehen sein, dass das Verhältnis von Außendurchmesser des Gewindes zum Kerndurchmesser der Schraube im Bereich von etwa 1,32 bis etwa 1,42 liegt, wobei dieser Wertebereich bei den dickeren Schrauben zu kleineren Werten verschoben sein kann, also beispielsweise bei Schrauben der Nenngröße 10 und 12 mm von 1,26 bis 1,34 reicht. Es hat sich herausgestellt, dass dieses Verhältnis einen besonders günstigen Wert im Hinblick auf die Festigkeit der Schraubverbindung darstellt.

Erfindungsgemäß kann vorgesehen sein, dass das Verhältnis von Außendurchmesser des Gewindes zu der Steigung des Gewindes im Bereich von etwa 1,34 bis etwa 1,45 liegt.

Die Gewindeflanken der von der Erfindung vorgeschlagenen Schraube schließen vorzugsweise einen Winkel von etwa 18 bis 25 Grad miteinander ein, wobei der günstigste Wert im Bereich von etwa 20 Grad liegt.

Erfindungsgemäß kann vorgesehen sein, dass die Gewindeflanken symmetrisch zueinander angeordnet sind, die Schraube also ein symmetrisches Gewinde aufweist.

Zur weiteren Verbesserung der Einschraubeigenschaften der von der Erfindung vorgeschlagenen Betonschraube kann vorgesehen sein, dass mindestens eine Gewindeflanke des Gewindes Kerben aufweist. Im Gegensatz zu den bekannten Schneidkerben sind die von der Erfindung vorgeschlagenen Kerben derart ausgebildet, dass sie in der Gewindeflanke angeordnet sind, so dass sich die Außenkontur des Gewindes nicht ändert. Die abgeflachte Gewindekante des Gewindes liegt daher nach wie vor auf der Zylinderfläche, ohne dass die abgeflachte Gewindekante nach innen abweicht.

Erfindungsgemäß kann vorgesehen sein, dass die Kerben sich von dem Schaft der Schraube bis zu der Außenkante des Gewindes erstrecken.

Erfindungsgemäß kann es ausreichen, wenn nur eine Gewindeflanke solche Kerben aufweist. Besonders günstig ist es aber, wenn beide Gewindeflanken Kerben aufweisen.

Es kann dabei vorgesehen sein, dass die Kerben in beiden Gewindeflanken abwechselnd angeordnet sind, vorzugsweise derart, dass die Kerben der einen Gewindeflanke in Umfangsrichtung gesehen mittig zwischen den Kerben der anderen Gewindeflanke angeordnet sind.

Insbesondere kann vorgesehen sein, dass die Kerben gleichen Abstand voneinander aufweisen.

Die Erfindung schlägt vor, dass die Kerben einen Boden aufweisen können, der etwa parallel zu der jeweiligen Gewindeflanke verläuft, in der die Kerben angeordnet sind. Damit wird erreicht, dass die Kerbe überall die gleiche Tiefe aufweist.

In nochmaliger Weiterbildung kann vorgesehen sein, dass die Kerben von Seitenwänden begrenzt sind, die etwa radial verlaufen und/oder eben ausgebildet sind.

Es kann vorgesehen sein, dass die Seitenwände mit dem Boden der Kerben einen rechten Winkel einschließen.

Erfindungsgemäß können alle Kerben über die gesamte Länge der Schraube die gleiche Tiefe aufweisen, mindestens aber in einem bestimmten Bereich der Schraube.

Zum Erleichtern des anfänglichen Eindrehens der Betonschraube kann erfindungsgemäß vorgesehen sein, dass die ersten Gewindegänge, beispielsweise die vier ersten Gewindegänge, übliche Schneidkerben aufweisen, die den Gewindegang vollständig einkerben, so dass hier die Gewindekante eben nicht mehr in der Zylinderfläche liegt, sondern nach innen abweicht.

Die Breite der Kerben in Umfangsrichtung gemessen kann etwa die dreifache Dicke der abgeflachten Gewindekanten sein.

Weitere Merkmale, Einzelheiten und Vorzüge der Erfindung ergeben sich aus der folgenden Beschreibung einer bevorzugten Ausführungsform der Erfindung sowie anhand der Zeichnung. Hierbei zeigen:
- Fig. 1: eine Seitenansicht einer von der Erfindung vorgeschlagenen Betonschraube;
- Fig. 2: in vergrößertem Maßstab die Stirnansicht eines halben Gewindegangs;
- Fig. 3: in vergrößertem Maßstab einen Teilschnitt durch einen Gewindegang an einer Stelle, wo er keine Kerbe aufweist;
- Fig. 4: einen der Figur 3 entsprechenden Schnitt durch eine Stelle, wo der Gewindegang eine Kerbe aufweist;
- Fig. 5: eine vergrößerte Seitenansicht eines abgewickelten Gewindegangs.
- Fig. 6: schematisch die Abwicklung eines Teils eines Gewindegangs.

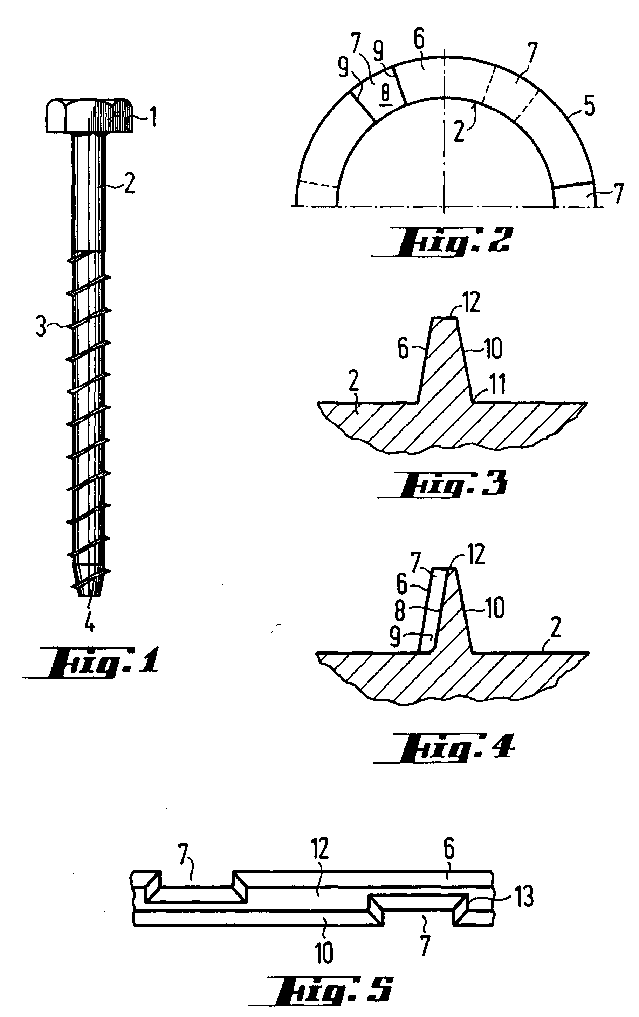

Die Figur 1 zeigt eine Seitenansicht einer von der Erfindung vorgeschlagenen Betonschraube, die an ihrem in Figur 1 oberen Ende mit einem Schraubenkopf 1 versehen ist. Bei dem Schraubenkopf handelt es sich um einen üblichen Sechskantkopf. Der Schraubenkopf ist an dem Ende des Schraubenschaftes 2 ausgebildet, der in seinem direkt an den Schraubenkopf 1 angrenzenden Bereich gewindefrei ausgebildet ist. Im übrigen Bereich ist der Schaft 2 mit einem Gewinde 3 versehen, das bis zum der in ihrem Durchmesser leicht verjüngten Schraubenspitze 4 reicht. In den ersten vier Gewindegängen weist das Gewinde an sich bekannte Schneidkerben auf. Das Gewinde weist eine relativ kleine Breite in Verhältnis zu der Ganghöhe auf.

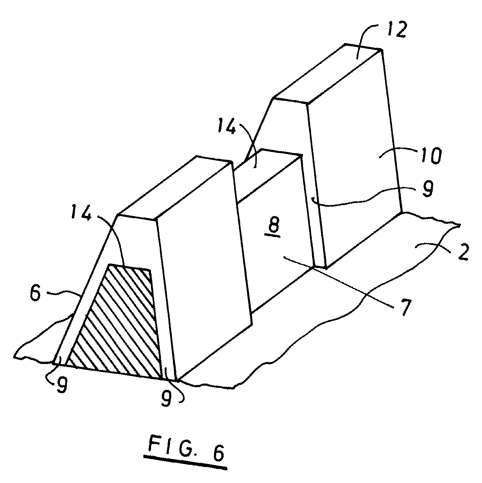

Figur 2 zeigt eine Stirnansicht des Gewindes. Die Außenkante 5 des Gewindes liegt in der Stirnansicht auf einem Kreisbogen um die Achse der Schraube. In der in Figur 2 zu sehenden Gewindeflanke 6 sind einzelne Kerben 7 ausgebildet, von denen in Figur 2 eine vollständige und eine zur Hälfte dargestellt ist. Die Kerben weisen einen Boden 8 und zwei Seitenwände 9 auf. Die Seitenwänden 9 verlaufen radial, so dass sich die Breite der Kerben 7, das heißt ihre Erstreckung in Umfangsrichtung, von innen nach außen etwas vergrößert. Die Kerben laufen von dem Schaft 2 bis zur Außenkante 5 des Gewindes.

Wie man der Figur 2 ebenfalls entnehmen kann, weist die gegenüberliegende Gewindeflanke 10 ebenfalls gestrichelt dargestellte Kerben 7 auf. Die Kerben 7 der einen Gewindeflanke 6 liegen mittig zwischen den Kerben 7 der anderen Gewindeflanke 10.

Nun zu Figur 3. In Figur 3 ist ein Schnitt durch einen Gewindegang gelegt, und zwar an einer Stelle, wo keine Kerbe vorhanden ist. Das Gewinde ist symmetrisch ausgebildet. Die beiden Gewindeflanken 6, 10 schließen einen Winkel von etwa 20 Grad miteinander ein. In dem Schnitt verlaufen beide Gewindeflanken 6, 10 geradlinig und gehen in einer Kante 11 in den zylindrischen Schraubenschaft 2 über.

Obwohl die Gewindeflanken 6, 10 nach außen konvergieren, treffen sie sich nicht in einer Gewindekante, sondern enden vorher in einer Fläche 12, die im Schnitt geradlinig verläuft, wobei die Begrenzungslinie parallel zu der Längsachse der Schraube angeordnet ist. Der Flächenabschnitt 12 liegt also in einer Zylinderfläche. Da vorzugsweise alle Gewindegänge den gleichen Außendurchmesser aufweisen, liegen die Flächenabschnitte 12, die die beiden Gewindeflanken 6, 10 miteinander verbinden, in einer gemeinsamen Zylinderfläche konzentrisch zur der Achse der Schraube.

Figur 4 zeigt einen der Figur 3 entsprechenden Schnitt an einer anderen Stelle des Gewindegangs. An dieser Stelle ist in der einen Gewindeflanke 6 eine Kerbe 7 vorhanden. Der Boden 8 der Kerbe verläuft parallel zu der Gewindeflanke 6 zu beiden Seiten der Kerbe 7. Daher hat die Kerbe 7 überall die gleiche Tiefe. Die Kerbe ist so ausgebildet, dass sie bis zu dem Flächenabschnitt 12 reicht, der auch an der Stelle der Kerbe 7 noch eine endliche Breite aufweist, also immer noch keine Gewindekante bildet. Die Breite der Fläche 12 an dieser Stelle beträgt etwa ein Drittel ihrer Breite an den Stellen, wo keine Kerbe vorhanden ist, siehe Figur 3.

Figur 5 zeigt nun eine Abwicklung des Flächenabschnitt 12, also die "abgeflachte Gewindekante". Sie wird von den beiden Gewindeflanken 6, 10 begrenzt, die die Kerben 7 enthalten. Der Flächenabschnitt 12 weist daher eine unterschiedliche Breite auf, wobei die Verringerung der Breite abwechselnd auf der einen und auf der anderen Seite erfolgt. Die Ausmündung der Kerben 7 in dem Flächenabschnitt 12 wird von einem Rechteck gebildet, das mit seinen kurzen Seiten 13 Schneidkanten bildet, die das Einschrauben der Betonschraube in die Wand der Bohrung erleichtern und verbessern.

Die Fig. 6 zeigt perspektivisch einen Teil einer Abwicklung eines Gewindes. Die "abgeflachte Gewindekante" 12 verläuft hier nicht durchgehend, sondern weist Lücken auf, in denen der die Gewindeflanken 6, 10 verbindende Flächenabschnitt 14 in einen verringerten Abstand von dem Kern des Gewindes bzw. dem Schaft 2 der Schraube aufweist. Dadurch wird ein zahnartiges Gewinde gebildet, das also keine durchgehende Gewindekante mehr aufweist.

Bei der dargestellten Ausführungsform sind die Kerben 7 der beiden Gewindeflanken 6, 10 an der gleichen Stelle ausgebildet. Eine andere Ausbildung wäre auch hier möglich.

## Patentansprüche

1. Betonschraube, mit
1.1 einem Schraubenkopf (1),
1.2 einem Schraubenschaft (2),
1.3 einer Schraubenspitze sowie mit
1.4 einem Gewinde (3),
1.4.1 dessen Gewindeflanken (6, 10) im Bereich der Außenkontur des Gewindes durch einen Abschnitt (12) verbunden sind, der
1.4.2 mindestens teilweise flächig ausgebildet ist, wobei
1.4.3 die Fläche (12) mindestens angenähert in einer Zylinderfläche liegt.

2. Betonschraube nach Anspruch 1, bei der der Abschnitt (12) über die gesamte Länge des Gewindes (3) flächig ausgebildet ist.

3. Betonschraube nach Anspruch 1 oder 2, bei der das Verhältnis von Außendurchmesser zu Kerndurchmesser im Bereich von etwa 1,32 bis etwa 1,42 liegt, bei größeren Schrauben im Bereich von etwa 1,24 bis etwa 1,34.

4. Betonschraube nach einem der vorhergehenden Ansprüche, bei der das Verhältnis von Außendurchmesser zu Steigung des Gewindes (3) im Bereich von etwa 1,34 bis etwa 1,45 liegt.

5. Betonschraube nach einem der vorhergehenden Ansprüche, bei der die Gewindeflanken (6, 10) einen Winkel von etwa 18 Grad bis etwa 25 Grad miteinander einschließen.

6. Betonschraube nach einem der vorhergehenden Ansprüche, bei der die Gewindeflanken (6, 10) symmetrisch zueinander angeordnet sind.

7. Betonschrauben nach einem der vorhergehenden Ansprüche, bei der mindestens eine Gewindeflanke (6, 10) Kerben (7) aufweist.

8. Betonschraube nach Anspruch 7, bei der die Kerben (7) sich von dem Schaft (2) der Schraube bis zu der Außenkontur des Gewindes (3) erstrecken.

9. Betonschraube nach Anspruch 7 oder 8, bei der beide Gewindeflanken (6, 10) Kerben (7) aufweisen.

10. Betonschraube nach Anspruch 9, bei der die Kerben (7) der beiden Gewindeflanken (6, 10) sich in Umfangsrichtung abwechseln, wobei die Kerben (7) der einen Gewindeflanke (6, 10) etwa mittig zwischen den Kerben (7) der jeweils anderen Gewindeflanke (10, 6) angeordnet sind.

11. Betonschraube nach einem der Ansprüche 7 bis 10, bei der die Kerben (7) einen Boden (8) aufweisen, der etwa parallel zu der jeweiligen Gewindeflanke (6, 10.) verläuft.

12. Betonschraube nach einem der Ansprüche 7 bis 11, bei der die Kerben (7) Seitenwände (9) aufweisen, die etwa radial verlaufen.

13. Betonschraube nach einem der Ansprüche 7 bis 12, bei der die Kerben (7) Seitenwände (9) aufweisen, die eben ausgebildet sind.

14. Betonschraube nach einem der Ansprüche 11 bis 13, bei der die Seitenwände (9) der Kerben (7) senkrecht zu ihrem Boden (8) verlaufen.

15. Betonschraube nach einem der Ansprüche 7 bis 14, bei der alle Kerben (7) gleich tief sind.

16. Betonschraube nach einem der vorhergehenden Ansprüche, bei der die ersten Gewindegänge Schneidkerben aufweisen, die den jeweiligen Gewindegang vollständig einkerben.

17. Betonschraube nach einem der Ansprüche 7 bis 16, bei der die Breite der Kerben (7) in Umfangsrichtung gesehen etwa das dreifache der Dicke der die Gewindeflanken (6, 10) verbindenden Fläche (12) beträgt.

18. Betonschraube nach einem der Ansprüche 7 bis 17, bei der die Breite des die Gewindeflanken (6, 10) verbindenden Flächenabschnitts (12) an den Stellen, wo eine Kerbe (7) vorhanden ist, auf ein Drittel ihrer sonstigen Breite reduziert ist.

19. Betonschraube nach einen der Ansprüche 7 bis 18, bei der die Kerben (7) in der die Gewindeflanken (6, 10) verbindenden Fläche (12) scharfkantig ausmünden.

20. Betonschraube nach einem der Ansprüche 7 bis 19, bei der der die Gewindeflanken (6, 10) verbindende Abschnitt (12) an der Stelle der Kerben (7) einen verringerten Abstand von dem Kern des Gewindes bzw. dem Schaft (2) der Schraube aufweist.

21. Betonschraube nach einem der Ansprüche 9 und 11 bis 20, bei der die Kerben (7) der beiden Gewindeflanken (6, 10) an der gleichen Stelle angeordnet sind.
